# EUROPÄISCHE PATENTSCHRIFT

(11) **EP 1 403 649 B1**
(45) Veröffentlichungstag und Bekanntmachung des Hinweises auf die Patenterteilung: **29.11.2006**
(21) Anmeldenummer: 03020969.6
(22) Anmeldetag: 16.09.2003
(51) Int. Cl.: G01R 31/26

(54) **Verfahren und Vorrichtung zur Diagnose von Photovoltaikgenatoren**
Procedure and device for diagnosing photovoltaic generators
Procédé et appareil pour tester des générateurs photovoltaics

(30) Priorität: 30.09.2002 DE 10245488; 14.10.2002 DE 10247776
(43) Veröffentlichungstag der Anmeldung: 31.03.2004
(73) Patentinhaber: SIEMENS AKTIENGESELLSCHAFT, 80333 München (DE)
(72) Erfinder: Kremer, Peter, 91074 Herzogenaurach (DE); Wesselak, Viktor, Dr., 91080 Spardorf (DE)

(56) Entgegenhaltungen:
- EP-A- 0 679 898
- EP-A- 1 143 594
- EP-A- 1 398 687
- US-A- 6 111 767

## Beschreibung

Die Erfindung betrifft ein Verfahren zur Diagnose von Photovoltaikgeneratoren einer Photovoltaikanlage während des Einspeisebetriebs, wobei ein Photovoltaikgenerator ein oder mehrere Solarmodule und eine zugehörige charakteristische Strom-Spannungs-Generatorkennlinie aufweist, und wobei ein Solarmodul mehrere untereinander verschaltete Solarzellen aufweist.

Die Erfindung betrifft einen Solarwechselrichter zur Durchführung des Verfahrens, sowie eine Photovoltaikanlage mit zumindest einem Solarwechselrichter.

Photovoltaikanlagen dienen der Einspeisung von elektrischem Strom in ein elektrisches Netz, wie z.B. in ein 1-phasiges 50Hz/230V-Spannungsnetz oder in ein 3-phasiges 50Hz/400V-Spannungsnetz. Dazu können Photovoltaikanlagen ein oder mehrere Photovoltaikgeneratoren aufweisen, wobei ein Photovoltaikgenerator aus einem oder mehreren Solarmodulen bestehen kann, welches bzw. welche wiederum eine Vielzahl von untereinander verschalteten Solarzellen aufweisen können. Dabei werden üblicherweise die Solarzellen eines Solarmoduls als "String" in Reihe, insbesondere mäanderförmig geschaltet. Der auf photovoltaischem Weg erzeugte elektrische Strom wird dann einem oder mehreren Wechselrichtern zugeführt, welcher oder welche die zugeführte Niedervoltspannung in eine geregelte standardisierte Netzspannung umwandelt. Derartige Solarwechselrichter sind für 1-phasige Ausführungen z.B. in der DE 196 42 522 C1 oder für 3-phasige Ausführungen in der Österreichischen Patentanmeldung mit dem amtlichen Anmeldekennzeichen 1737/01 bekannt. Eine Photovoltaikanlage kann zudem eine Anlagenleitebene zur Steuerung und Betriebsführung von mehreren angeschlossenen Solarwechselrichtern aufweisen.

Für den Betreiber einer Photovoltaikanlage ist die Kenntnis von Interesse, ob die eingesetzten Photovoltaikgeneratoren eine vom Hersteller garantierte elektrische Leistung auch noch nach einem längeren Betriebseinsatz erbringen. So ist bekannt, dass nach einiger Zeit die maximale elektrisch erzeugte Leistung gegenüber einem Inbetriebnahmezustand der Anlage abnimmt. Hersteller von Photovoltaikgeneratoren garantieren z.B. einen Wert von 90% eines maximalen Leistungswertes für einen Betriebszeitraum von 10 Jahre.

Allerdings ist ein entsprechender Nachweis für eine bereits vorliegende Leistungsdegradation schwer zu führen, da die von den Photovoltaikgeneratoren erbrachte elektrische Leistung von mehreren Faktoren abhängig ist. Zum einen hängt die erzeugte elektrische Leistung von der aktuellen Einstrahlungsintensität ε der Sonne ab, wobei mit zunehmenden Werten für ε der elektrische Strom im Photovoltaikgenerator ansteigt. Zum anderen nimmt für steigende Temperaturen T der Photovoltaikgeneratoren die anliegende elektrische Spannung ab. Weitere Aspekte sind z.B. Verschmutzungsgrade der Photovoltaikgeneratoren oder Abschattungseffekte. Abschattungseffekte können z.B. durch Laub entstehen, welches z.B. einen Teil der Solarmodule bzw. einen Teil der Solarzellen eines Solarmoduls bedeckt. In diesem Fall trägt diese bzw. tragen diese Solarzellen nicht zur Energieerzeugung bei. Vielmehr wirken diese wie eine in Sperrrichtung betriebene Diode, welche den Stromfluss der dazu in Reihe geschalteten anderen Solarzellen verhindert. Aus diesem Grund weisen verschaltete Solarzellen Bypassdioden zur "Umgehung" abgeschatteter Solarzellen, insbesondere zwischen den Mäandern eines "Strings" eines Solarmoduls auf.

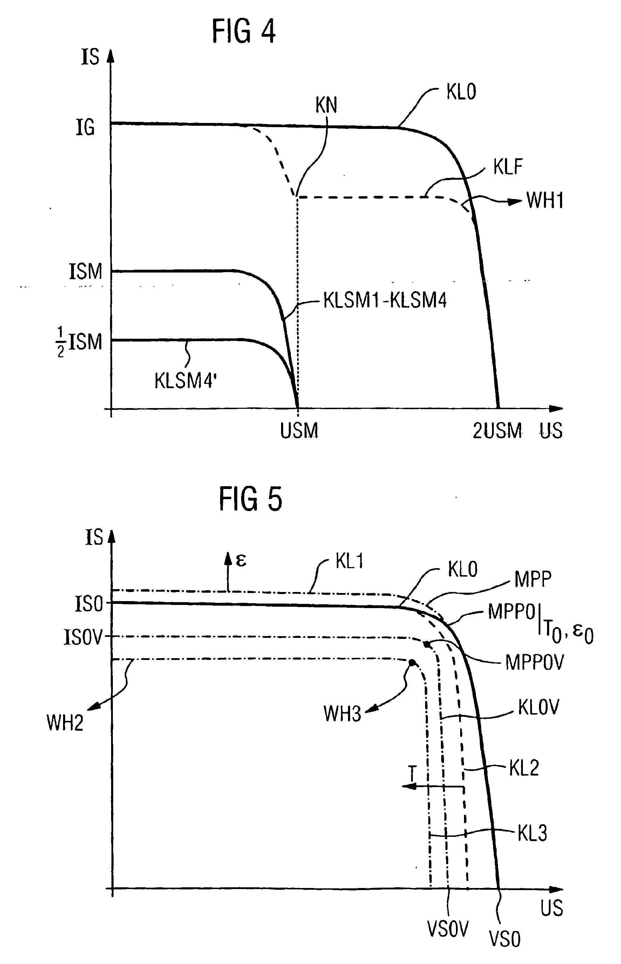

Zur Beurteilung der Leistungsfähigkeit von Photovoltaikgeneratoren dient vor allem eine zugehörige charakteristische Strom-Spannungs-Generatorkennlinie. Beispiele für eine solche Generatorkennlinie sind in den Figuren 4 und 5 der vorliegenden Anmeldung dargestellt. Dabei weist die Abszisse die an einem Photovoltaikgenerator anliegende Spannung, die Ordinate den durch den Photovoltaikgenerator fließenden Strom auf. Durch Anlegen einer variablen Last an den Photovoltaikgenerator, wie z.B. eines variablen Widerstands, können dann alle Punkte auf der Generatorkennlinie vom Leerlauf bis zum Kurzschluss des Photovoltaikgenerators "durchfahren" und somit vermessen werden.

Wie eingangs beschrieben, unterliegen diese Generatorkennlinien Verformungen, so dass Kurvenscharen in Abhängigkeit von der Einstrahlungsintensität und der Solarzellentemperatur resultieren. Aus diesem Grund wurden standardisierte Testbedingungen festgelegt, welche eine normierte Temperatur sowie eine normierte spektrale Einstrahlungsintensität festlegen. Die normierte Temperatur T₀ beträgt hierbei 298K, die spektrale Einstrahlungsintensität ε₀ 1000W/m² auf Basis eines AM 1,5-Spektrums nach der IEC-Norm 904.3, Teil III. Mittels geeigneter Normierungsvorschriften kann somit eine gemessene Strom-Spannungs-Generatorkennlinie bei Kenntnis der aktuellen Solarzellentemperatur in einem Solarmodul sowie der aktuellen spektralen Einstrahlungsintensität normiert werden. Solarzellentemperatur sowie spektrale Einstrahlungsintensität können hierzu mittels geeigneter Sensorik erfasst werden. Zeitliche Änderungen der Sonneneinstrahlung, wie z.B. bei eintretender Bewölkung, bedingen, dass zur Vermeidung von Ungenauigkeiten die Vermessung einer Generatorkennlinie in einem kurzen Zeitraum erfolgen muss. Folglich liegen die typischen Messzeiträume im Millisekundenbereich.

Aus einer Veröffentlichung von Wesselak, Viktor: Regelungstechnische Beiträge zum leistungsoptimalen Betrieb von Solaranlagen, Diss., Erlangen, 1999, ist das Prinzip einer Messeinrichtung bekannt, welche parallel an einen Photovoltaikgenerator angeschlossen werden kann. Die Messeinrichtung weist dort eine elektronisch steuerbare Last zum messtechnischen "Durchfahren" einer Generatorkennlinie auf. Die aufgezeichnete Generatorkennlinie beinhaltet dabei wertvolle Informationen über den Zustand der Gesamtanlage. Ein Betrachter, der mittels dieser Messeinrichtung regelmäßig eine Generatorkennlinie aufzeichnet, kann dann z.B. erkennen, ob ein Teil eines Moduls ausgefallen oder abgeschattet ist. Dies ist dann der Fall, wenn der Kennlinienverlauf der Generatorkennlinie eine signifikante Knickstelle aufweist.

Für einen Betreiber einer Photovoltaikanlage ist es als nachteilig zu betrachten, dass in regelmäßigen Abständen eine Aufzeichnung der Generatorkennlinie veranlasst werden muss. Diese ist dann visuell zu bewerten, um ggf. auch Wartungsmaßnahmen einleiten zu können.

Ein weiterer Nachteil ist, dass eine zusätzliche elektronische Messeinrichtung benötigt wird, um während des Einspeisebetriebs die Generatorkennlinie vermessen zu können.

Aus US 6 111 767 A ist ein Solarwechselrichter bekannt, der ein integriertes Messgerät zur Aufnahme einer Strom-Spannungs-Kennlinie aufweist. Mittels dieser Strom-Spannungs-Kennlinie können durch einen Betrachter weitere Informationen gewonnen werden, eine automatische Untersuchung der Kennlinie auf eine signifikante Knickstelle wird hierbei allerdings nicht durchgeführt.

Aus EP 1 398 687 A2 ist ein Verfahren zur Betriebsüberwachung einer Photovoltaikanlage bekannt, bei der ebenfalls eine Strom-Spannungs-Kennlinie aufgenommen wird. Hierbei wird die aufgenommene Kennlinie mit einer Soll-Kennlinie verglichen und eine Abweichung als Betriebsfehler identifiziert. Eine Untersuchung auf eine signifikante Knickstelle in der Kennlinie zur Erkennung eines Ausfalls oder einer Abschattung eines Teils eines Moduls wird allerdings auch hier nicht durchgeführt.

Es ist somit eine Aufgabe der Erfindung, ein Verfahren sowie eine Vorrichtung anzugeben, welche eine Notwendigkeit zur Bewertung des gesamten Anlagezustands durch den Betreiber vermeidet. Eine weitere Aufgabe der Erfindung ist es, eine Lösung anzubieten, durch welche auf die zusätzliche Messeinrichtung zur Vermessung einer Generatorkennlinie verzichtet werden kann.

Die Aufgabe wird gelöst mit einem Verfahren zur Diagnose von Photovoltaikgeneratoren einer Photovoltaikanlage während eines Einspeisebetriebs, wobei ein Photovoltaikgenerator mehrere untereinander verschaltete Solarmodule und eine charakteristische Strom-Spannungs-Generatorkennlinie aufweist, wobei ein Solarmodul mehrere untereinander verschaltet Solarzellen aufweist. Die Solarzellen eines Solarmoduls können zudem Bypassdioden aufweisen. Es wird zumindest ein Teil der Generatorkennlinie des Photovoltaikgenerators wiederholt in kurzen Zeitenräumen vermessen, und dann ein automatisierter erster Wartungshinweis ausgegeben, falls der zumindest eine Teil der vermessenen Generatorkennlinie mindestens eine Knickstelle aufweist.
Es wird ein zweiter Wartungshinweis ausgegeben, falls ein Teil der Generatorkennlinie eine vorgebbare normierte betriebliche Grenzkennlinie zumindest in einem Punkt unterschreitet.

Es kann der maximale Leistungspunkt auf der Generatorkennlinie insbesondere rechnerisch ermittelt werden, und dann ein dritter Wartungshinweis ausgegeben werden, falls ein vorgebbarer normierter maximaler Grenzleistungspunkt unterschritten wird.

Zusätzlich kann die aktuelle Temperatur der Solarzellen und /oder die aktuelle spektrale Einstrahlungsintensität zur Normierung eines aktuell vermessenen Teils der Generatorkennlinie gemessen werden. Der vermessene Teil der Generatorkennlinie kann z.B. auf eine Temperatur der Solarzellen von 298K bei einer spektralen Einstrahlungsintensität von 1000W/m² auf Basis eines AM 1,5-Spektrums nach der IEC-Norm 904-3, Teil III, normiert werden.

Bei dem erfindungsgemäßen Verfahren wird als zumindest eine Teil der Generatorkennlinie des Photovoltaikgenerators der Bereich um den maximalen Leistungspunkt auf der Generatorkennlinie vermessen. Es können auch Bereiche auf der Generatorkennlinie mit starker Krümmung vermessen werden, wobei ein Bereich mit starker Krümmung um den maximalen Leistungspunkt liegt. Weiterhin können die Photovoltaikgeneratoren während des Einspeisebetriebs und außerhalb der Messzeiträume vorzugsweise im maximalen Leistungspunkt auf der Generatorkennlinie betrieben werden. Zur Vermessung zumindest eines Teils der Generatorkennlinie kann eine vorgebbare elektrische Netzeinspeiseleistung als aktive Last für die Photovoltaikgeneratoren eingestellt werden.

Die Aufgabe wird weiterhin gelöst mit einem Solarwechselrichter zur Einspeisung in ein elektrisches Netz, insbesondere in ein 1-phasiges oder 3-phasiges 50Hz- bzw. 60Hz-Wechselspannungsnetz. Der Solarwechselrichter weist eine Eingangsseite zum Anschluss zumindest eines Photovoltaikgenerators, eine Ausgangsseite zur Netzeinspeisung sowie zumindest einen Energiespeicher, Dioden und Halbleiterschalter zur Erzeugung der ausgangsseitigen Wechselspannung bzw. Wechselspannungen auf. Halbleiterschalter können z.B. MOSFET-Transistoren oder IGBTs sein. Der Solarwechselrichter weist eine elektronische Datenverarbeitungseinheit, wie z.B. einen Mikrocontroller oder einen Mikrocomputer, zumindest zur Ansteuerung der Halbleiterschalter sowie Messmittel zumindest zur Erfassung der elektrischen Ein- und Ausgangsgrößen für die Steuerung bzw. Regelung des Solarwechselrichters auf.

Erfindungsgemäß sind die Halbleiterschalter durch den Mikrocontroller so ansteuerbar, dass zumindest ein Teil einer charakteristischen Strom-Spannungs-Generatorkennlinie eines angeschlossenen Photovoltaikgenerators vermessbar ist. Dabei können die Halbleiterschalter durch den Mikrocontroller so ansteuert werden, dass eine vorgebbare elektrische Netzeinspeiseleistung einstellbar ist, welche dann wie eine einstellbare Last für den Photovoltaikgenerator wirkt.

Die Halbleiterschalter können ferner durch den Mikrocontroller so ansteuert werden, dass eine variable elektrische Netzeinspeiseleistung ausgehend von einem maximalen Leistungspunkt in beiden Richtungen auf der Generatorkennlinie einstellbar ist. Der Mikrocontroller kann Ausgabemittel für einen ersten Wartungshinweis aufweisen, falls der zumindest eine Teil der vermessenen Generatorkennlinie mindestens eine Knickstelle aufweist. Weiterhin kann der Solarwechselrichter Vergleichs- und Ausgabemittel für einen zweiten und dritten Wartungshinweis zur Durchführung des Verfahrens aufweisen. Zudem kann der Solarwechselrichter über eine Anschlussmöglichkeit zum Anschluss eines Temperatursensors und/oder eines Einstrahlungsintensitäts-Sensors für einen Photovoltaikgenerator, sowie über Vergleichs- und Ausgabemittel für alle Wartungshinweise zur Durchführung der Verfahren verfügen.

Schließlich wird die Aufgabe gelöst mit einer Photovoltaikanlage zur Einspeisung in ein elektrisches Netz mit zumindest einem Solarwechselrichter mit zumindest einem daran angeschlossenen Photovoltaikgenerator. Dabei können die jeweiligen Solarwechselrichter datentechnisch mit einer Anlagenleitebene zur zentralen Steuerung und Betriebsführung der Photovoltaikanlage verbunden sein, u.a. zur Übermittelung der Wartungshinweise der jeweiligen Solarwechselrichter.

Damit ist vorteilhaft die Ausgabe von automatisierten Wartungshinweisen an den Betreiber einer Photovoltaikanlage möglich, falls eine Abschattung, eine übermäßige Verschmutzung, ein Ausfall oder eine Leistungsdegradation zumindest eines Photovoltaikgenerators vorliegt.

Ein Vorteil ist weiterhin, dass teueres Wartungspersonal nur dann angefordert werden muss, wenn ein entsprechender Wartungshinweis beim Betreiber eingegangen ist.

Zudem kann vorteilhaft im Rahmen einer Inbetriebnahme einer Photovoltaikanlage ein bereits fehlerhafter Photovoltaikgenerator sofort erkannt und dieser dann ausgetauscht werden.

Ein weiterer Vorteil ist es, dass als aktive Last zur Vermessung der Generatorkennlinie eines Photovoltaikgenerators die bereits vorhandenen Halbleiterbauelemente und Messmittel eines Solarwechselrichters verwendet werden können. Dies sind insbesondere die Halbleiterschalter für die Wechselrichtung und die Strom- und Spannungsmesser für die elektrischen Eingangsgrößen des Solarwechselrichters.

Schließlich kann vorteilhaft auf die externe Messeinrichtung zur Vermessung der Generatorkennlinie verzichtet werden.

Die Erfindung wird an Hand der nachfolgenden Figuren näher erläutert. Dabei zeigt
- FIG 1 :: einen beispielhaften Aufbau einer Photovoltaikanlage, mit einer Messeinrichtung zur Vermessung einer Generatorkennlinie eines Photovoltaikgenerators nach dem Stand der Technik,
- FIG 2 :: einen beispielhaften Aufbau einer Photovoltaikanlage mit einem erfindungsgemäßen Solarwechselrichter, welcher zusätzliche Mittel zur Vermessung einer Generatorkennlinie eines Photovoltaikgenerators und Vergleichs- und Ausgabemittel für Wartungshinweise aufweist,
- FIG 3 :: ein beispielhaftes Pulsmuster zur Ansteuerung der Halbleiterschalter eines Solarwechselrichters,
- FIG 4 :: beispielhafte Strom-Spannungs-Generatorkennlinien eines Photovoltaikgenerators, welcher vier verschaltete Solarmodule gemäß dem Beispiel in FIG 1 und FIG 2 und eine beispielhafte Knickstelle aufweist, und
- FIG 5 :: beispielhafte Generator-Kennlinienscharen in Abhängigkeit von der Solarzellentemperatur und der Einstrahlungsintensität, eine zugehörige normierte Generatorkennlinie und eine betriebliche Grenzkennlinie.

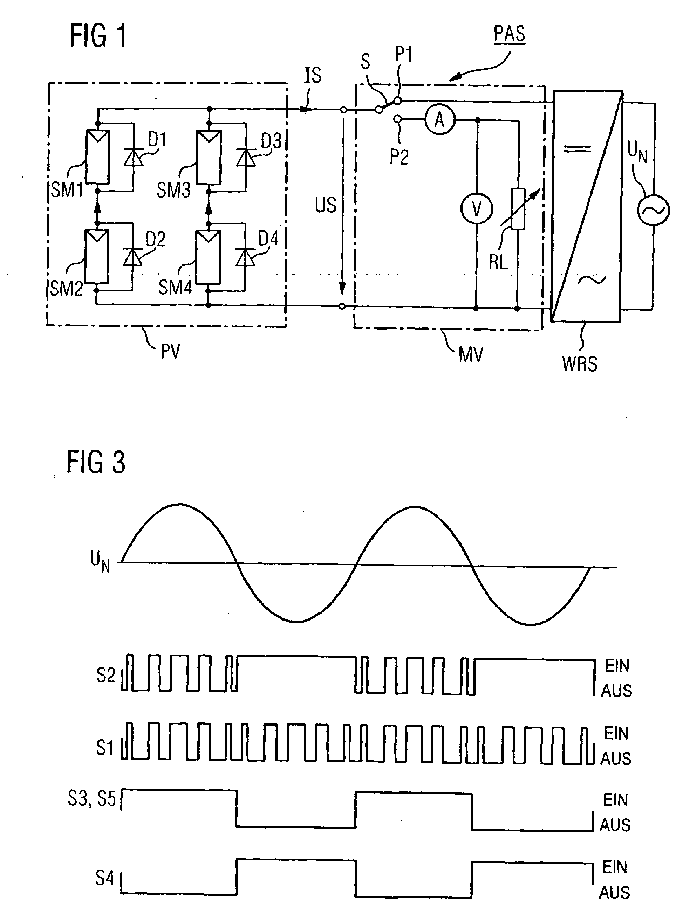

FIG 1 zeigt einen beispielhaften Aufbau einer Photovoltaikanlage PAS, mit einer Messeinrichtung MV zur Vermessung einer Generatorkennlinie eines Photovoltaikgenerators PV nach dem Stand der Technik. Dabei wurde eine besonders einfacher Messaufbau zur Erläuterung des Messprinzips gewählt. Beispielhafte Verläufe einer Generatorkennlinie sind in den Figuren 4 und 5 dargestellt.

In einem Einspeisebetrieb ist über einen Schalter S in der Schalterstellung P1 ein Photovoltaikgenerator PV mit einem Solarwechselrichter WRS verbunden, so dass eine ausgangsseitige Einspeisung in ein elektrisches Netz U_{N} möglich wird. Der Photovoltaikgenerator PV ist im Beispiel der Figur der Einfachheit halber aus einer Parallelschaltung von zwei Reihenschaltungen aus je zwei Solarmodulen SM1-SM4 aufgebaut. Die Solarmodule SM1-SM4 eines Photovoltaikgenerators PV können dabei eine Vielzahl von Solarzellen aufweisen, welche üblicherweise als "String" in Reihe geschaltet und mäanderförmig angeordnet sind. Zur Vermeidung von unverhältnismäßig großen Einspeiseverlusten wird z.B. über einen Teil des "Strings" des Solarmoduls SM1-SM4, wie z.B. zwischen zwei Mäandern eines "Strings", eine Bypassdiode D1-D4 geschaltet, so dass der Ausfall einer oder mehrerer Solarzellen in einem "String" nicht zu einem Ausfall des ganzen "String" führt. Die Verschaltung der Solarzellen mittels Bypass-Dioden D1-D4 wird der Einfachheit halber exemplarisch durch eine BypassDiode D1-D4 für je ein Solarmodul SM1-SM4 dargestellt. Weiterhin ist die am Photovoltaikgenerator PV anliegende Spannung US sowie der zugehörige elektrische Strom IS in die Figur eingetragen.

In einem Messbetrieb kann durch Umlegen des Schalters S in die Schalterstellung P2 eine für den jeweiligen Photovoltaikgenerator PV charakteristische Strom-Spannungs-Generatorkennlinie vermessen werden. Dazu dient eine beispielhaft dargestellte variable ohmsche Last RL, welche ein "Durchfahren" der Generatorkennlinie vom Kurzschluss (RL=0Ω) bis zum Leerlauf (RL=∝Ω) erlaubt. Für jeden Belastungspunkt kann dann der jeweilige Strom IS und die jeweilige Spannung US mittels eines Strom- und Spannungsmessers (A,V) gemessen werden.

In der Praxis wird auf den Schalter S verzichtet, und ein elektronisches Bauelement, wie z.B. ein FET-Transistor, parallel zur Einspeisung am Solarwechselrichter WRS angeordnet. Dieses wird dann zur Einstellung der gewünschten ohmschen Last angesteuert. Die Ansteuerung kann z.B. über einen Digital-/Analog-Ausgang eines Messrechners erfolgen.

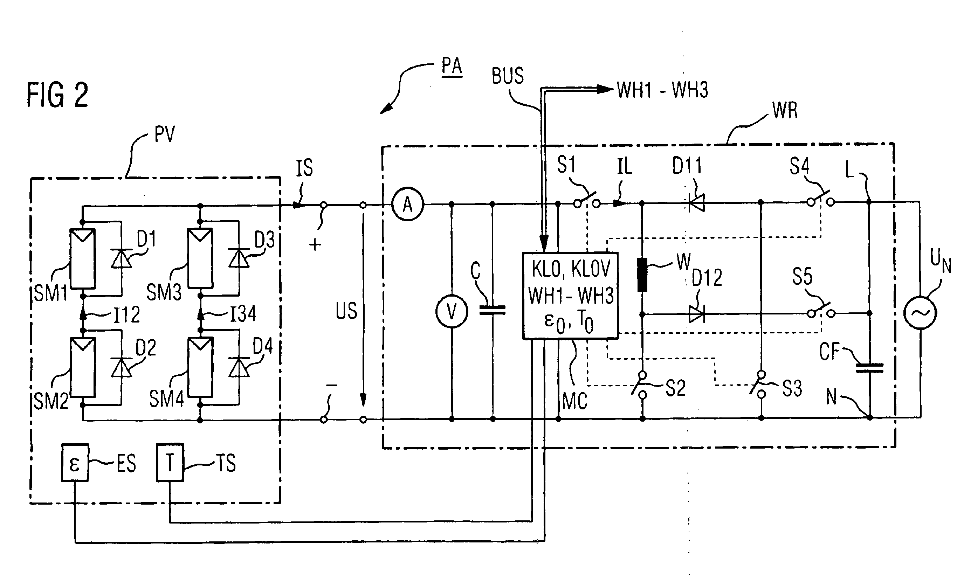

FIG 2 zeigt einen beispielhaften Aufbau einer Photovoltaikanlage PA mit einem Solarwechselrichter WR gemäß der Erfindung. Der Solarwechselrichter WR weist dabei zusätzliche Mittel zur Vermessung einer Generatorkennlinie eines Photovoltaikgenerators PV, Vergleichsmittel und Ausgabemittel BUS für Wartungshinweise WH1-WH3 auf. Die o.g. Mittel können z.B. durch einen in der FIG 2 dargestellten programmierbaren Mikrocontroller MC verwirklicht werden. Zusätzlich können neben den Wartungshinweisen WH1-WH3 auch gemessene Generatorkennlinien der jeweiligen Solarwechselrichter WR ausgegeben werden. Die Ausgabemittel BUS können z.B. eine Datenverbindung, wie z.B. eine draht- oder funkbasierende Busverbindung sein. Die Wartungshinweise WH1-WH3 und/oder die Generatorkennlinien können auch an eine übergeordnete Anlagenleitebene zur zentralen Steuerung und Betriebsführung der Photovoltaikanlage übermittelt werden. Ein möglicher Leitrechner der Anlagenleitebene kann dabei zentral die Steuerung und Betriebsführung, die Weiterbehandlung der Wartungshinweise WH1-WH3 sowie einen Vergleich der übermittelten Generatorkennlinien mit hinterlegten betrieblichen Grenzkennlinien übernehmen.

Damit ist vorteilhaft die Ausgabe von automatisierten Wartungshinweisen WH1-WH3 an den Betreiber einer Photovoltaikanlage PA möglich, falls eine Abschattung, eine übermäßige Verschmutzung, ein Ausfall oder eine Leistungsdegradation einer oder mehrerer Solarzellen zumindest eines Solarmoduls SM1-SM4 eines Photovoltaikgenerators PV vorliegt. Die Anlagenleitebene kann dabei wiederum eine Vielzahl von verteilt angeordneten Solarwechselrichter WR steuern, welche ihrerseits von Photovoltaikgeneratoren PV gespeist werden.

Teueres Wartungspersonal ist vorteilhaft nur dann anzufordern, wenn ein entsprechender Wartungshinweis WH1-WH3 beim Betreiber eingegangen ist.

Erfindungsgemäß weist der Solarwechselrichter WR eine Eingangsseite +,- zum Anschluss zumindest eines Photovoltaikgenerators PV, eine Ausgangsseite L,N zur Netzeinspeisung U_{N} sowie zumindest einen Energiespeicher W,C, Dioden D11,D12 sowie Halbleiterschalter S1-S5 zur Erzeugung der ausgangseitigen Wechselspannung auf. Die Halbleiterschalter S1-S5 können z.B. MOSFET-Transistoren oder IGBTs sein.

Im Beispiel der Figur 3 ist dazu ein beispielhaftes Pulsmuster zur Ansteuerung der Halbleiterschalter S1-S5 eines Solarwechselrichters WR dargestellt. Die pulsweitenmodulierte Ansteuerung der Halbleiterschalter S1, S2 führt dabei zu einer Aufwärtswandlung der Eingangsspannung US mit Hilfe der beiden Energiespeicher C und W. Die Halbleiterschalter S3-S5 schalten die dann erzeugten sinusförmigen Halbwellen als "Polwender" auf den Ausgang L,N. Ein Filterkondensator CF dient abschließend der Glättung der Ausgangsspannung U_{N}.

Der Solarwechselrichter WR weist ferner im Beispiel der FIG 2 einen Mikrocontroller MC als Datenverarbeitungseinheit zumindest zur Ansteuerung der Halbleiterschalter S1-S5 auf. Messmittel A,V dienen dabei der Erfassung der elektrischen Ein- und Ausgangsgrößen IS, US, U_{N} für die Steuerung bzw. Regelung des Solarwechselrichters WR. Erfindungsgemäß sind die Halbleiterschalter S1-S5 durch den Mikrocontroller MC so ansteuerbar, dass zumindest ein Teil einer charakteristischen Strom-Spannungs-Generatorkennlinie eines angeschlossenen Photovoltaikgenerators PV vermessbar ist. Dabei können die Halbleiterschalter S1-S5 durch den Mikrocontroller MC so ansteuert werden, dass eine vorgebbare elektrische Netzeinspeiseleistung einstellbar ist, welche dann wie eine einstellbare Last RL für das Photovoltaikgenerator PV wirkt.

Die bereits vorhandenen Halbleiterschalter S1-S5 sowie die Messmittel A,V des Solarwechselrichters WR können dabei vorteilhaft zur Vermessung der Generatorkennlinie eines Photovoltaikgenerators PV verwendet werden. Dadurch kann vorteilhaft auf eine zusätzliche Messeinrichtung MV bzw. mehrerer Messeinrichtungen MV bei entfernt zueinander angeordneten Photovoltaikgeneratoren PV verzichtet werden.

Die Halbleiterschalter S1-S5 können ferner durch den Mikrocontroller MC so ansteuert werden, dass eine variable elektrische Netzeinspeiseleistung ausgehend von einem maximalen Leistungspunkt in beiden Richtungen auf der Generatorkennlinie einstellbar ist. Der Mikrocontroller MC weist im Beispiel der vorliegenden Figur 2 Ausgabemittel BUS für einen ersten Wartungshinweis WH1 auf, falls der zumindest eine Teil der vermessenen Generatorkennlinie mindestens eine Knickstelle aufweist. Zudem kann der Solarwechselrichter WR eine Anschlussmöglichkeit für einen Temperatursensor TS und/oder einen Einstrahlungsintensitäts-Sensor ES für den beispielhaft dargestellten Photovoltaikgenerator PV sowie die Vergleichsmittel und Ausgabemittel für die ersten bis dritten Wartungshinweise WH1-WH3 aufweisen. Stellvertretend kann für mehrere Photovoltaikgeneratoren PV auch nur ein Sensor TS,ES verwendet werden, falls diese bezüglich der Sonneneinstrahlung die gleiche Ausrichtung besitzen. Die jeweiligen Messwerte T,ε können auch z.B. vom Mikrocontroller MC direkt erfasst werden. Dadurch sind die gemessenen Generatorkehnlinien KL1-KL3,KLF rechnerisch in eine normierte Generatorkennlinie KL0 abbildbar. Die für eine rechnerische Normierung notwendigen Bezugswerte T₀ bzw. ε₀ können dabei z.B. im Mikrocontroller MC hinterlegt werden. Die Vergleichsmittel dienen einem anschließenden Vergleich zwischen einer aktuell errechneten normierten Generatorkennlinie KL0 mit einer weiterhin im Mikrocontroller MC hinterlegten betrieblichen Grenzkennlinie KLOV.

FIG 4 zeigt eine beispielhafte normierte Strom-Spannungs-Generatorkennlinie KL0 eines Photovoltaikgenerators PV für einen störungsfreien Betrieb sowie eine schon gleichfalls normierte Strom-Spannungs-Generatorkennlinie KLF für einen gestörten Betriebsfall mit einer beispielhaften Knickstelle KN.

Die Generatorkennlinie KL0 resultiert aus einer Überlagerung aus vier Teilgeneratorkennlinien KLSM1-KLSM4 der vier verschalteten Solarmodule SM1-SM4 gemäß dem Beispiel in FIG 1 und FIG 2, die störbehaftete Generatorkennlinie KLF aus einer Überlagerung der störungsfreien Teilgeneratorkennlinien KLSM1-KLSM3 und einer störbehafteten Teilgeneratorkennlinie KLSM4'. Die Addition der einzelnen Teilgeneratorkennlinien KLSM1-KLSM4, KLSM4' erfolgt dabei gemäß den Kirchhoffschen Regeln. Auf der Abszisse ist die jeweilige am Photovoltaikgenerator PV abfallende Spannung US, auf der Ordinate der zugehörige Strom IS eingetragen. IG bezeichnet dabei im Diagramm den Kurzschlussstrom IG durch den gesamten Photovoltaikgenerator PV. USM bzw. 2USM ist die entsprechende Leerlaufspannung an einem Solarmodul SM1-SM4 bzw. die gesamte an den beiden Reihenschaltungen aus den Solarmodulen SM1,SM2 und SM3,SM4 anliegende Leerlaufspannung.

Das Entstehen der bereits o.g. Knickstelle KN wird durch eine graphische Superposition der Teilgeneratorkennlinien KLSM1-KLSM3, KLSM4' deutlich. Dazu wurde angenommen, dass das Solarmodul SM4 zur Hälfte abgeschattet sei und dieses folglich nur die Hälfte des Solarmodulstroms ISM bereitstellen könne. Bei kleinen Solarmodulspannungen bestimmt das Solarmodul SM3 den Strom durch die Solarmodule SM3 und SM4, dagegen bestimmt das Solarmodul SM4 den Strom bei großen Solarmodulspannungen. Der Einfachheit halber wurde die über den Bypassdioden D1-D4 abfallende Durchlassspannung vernachlässigt.

Erfindungsgemäß kann zumindest ein Teil der Generatorkennlinie des Photovoltaikgenerators PV wiederholt in kurzen Zeiträumen vermessen A,V werden, und dann ein automatisierter erster Wartungshinweis WH1 ausgegeben wird, falls der zumindest eine Teil der vermessenen Generatorkennlinie KLF mindestens eine Knickstelle KN aufweist.

Damit ist vorteilhaft die Erkennung einer Abschattung, einer übermäßigen lokalen Verschmutzung oder die Erkennung eines Ausfalls einer oder mehrerer Solarzellen zumindest eines Solarmoduls SM1-SM4 eines Photovoltaikgenerators PV während des Betriebs oder bei einer Inbetriebnahme einer Photovoltaikanlage PA möglich.

FIG 5 zeigt beispielhafte Generator-Kennlinienscharen KL1-KL3, welche in Abhängigkeit von der Solarzellentemperatur T und der Einstrahlungsintensität ε verformt werden, sowie die zugehörige normierte Generatorkennlinie KL0 gemäß FIG 4 und eine betriebliche Grenzkennlinie KLOV. IS0, IS0V bzw. VS0,VS0V bezeichnen die zu den beiden Generatorkennlinien KL0 bzw. KL0V eingetragenen Kurzschlussströme bzw. Leerlaufspannungen. Zusätzlich ist in den jeweiligen Generatorkennlinien der maximale Leistungspunkt MPP, MPP0, MPP0V eingetragen. In diesem "Arbeitspunkt" herrscht Anpassung, d.h. es ist eine maximale Entnahme von elektrischer Leistung aus dem Photovoltaikgenerator PV möglich. Die jeweilige elektrische Leistung eines Punktes auf der Generatorkennlinie kann dabei rechnerisch durch Produktbildung aus dem aktuellen Strom- und Spannungswert IS,US ermittelt werden.

Die Generatorkennlinie KL1 zeigt auch nochmals zur Verdeutlichung, in welche Richtung sich die Generatorkennlinie mit zunehmenden Werten für die Einstrahlungsintensität ε verformen. KL2 zeigt die Verformung von Generatorkennlinien für zunehmende Temperaturen T.

Erfindungsgemäß kann nun ein zweiter Wartungshinweis WH2 ausgegeben werden, falls ein Teil der Generatorkennlinie KL1-KL3,KLF eine vorgebbare normierte betriebliche Grenzkennlinie KL0V zumindest in einem Punkt unterschritten wird (siehe FIG. 5). Weiterhin kann gemäß der Erfindung, wie bereits gezeigt, der maximale Leistungspunkt MPP0 auf der Generatorkennlinie ermittelt werden und dann ein dritter Wartungshinweis WH3 ausgegeben werden, falls ein vorgebbarer normierter maximaler Grenzleistungspunkt MPP0V unterschritten wird. Damit ist vorteilhaft eine Leistungsdegradation oder eine übermäßige flächige Verschmutzung der Photovoltaikgeneratoren PV durch einen automatisierten Vergleich detektierbar.

Weiterhin kann gemäß der Erfindung die aktuelle Temperatur T der Solarzellen und/oder die aktuelle spektrale Einstrahlungsintensität ε zur Normierung KL0 eines aktuell vermessenen Teils der Generatorkennlinie gemessen werden. Der vermessene Teil der Generatorkennlinie kann weiterhin erfindungsgemäß auf eine Temperatur T₀ von 298K bei einer spektralen Einstrahlungsintensität ε₀ von 1000W/m² auf Basis eines AM 1,5-Spektrums nach der IEC-Norm 904-3, Teil III, normiert sein.

Dadurch ist vorteilhaft eine weitgehend von aktuellen Umwelteinflüssen wie Sonneneinstrahlung und Temperatur unabhängige und somit exaktere messtechnische Bewertung der gemessenen Generatorkennlinien KL1-KL3, KLF möglich. Damit ist weiterhin eine vorteilhaft höhere Zuverlässigkeit bezüglich der auszugebenden Wartungshinweise WH1-WH3 erzielbar.

Es kann gemäß der Erfindung der Bereich um den maximalen Leistungspunkt MPP, MPP0 auf der Generatorkennlinie KL1-KL3,KLF als zumindest eine Teil der Generatorkennlinie KL1-KL3,KLF des Photovoltaikgenerators PV vermessen werden. Insbesondere wird der Bereich mit geringen Generatorspannungen US "vermieden", um eine elektrische Eigenversorgung des Solarwechselrichters WR mit einer Mindestspannung aufrechtzuerhalten. Dadurch kann vorteilhaft auf eine Pufferung der Energieversorgung verzichtet werden.

Es können auch zusätzlich als zumindest eine Teil der Generatorkennlinie KL1-KL3, KLF des Photovoltaikgenerators PV Bereich mit starker Krümmung auf der Generatorkennlinie KL1-KL3,KLF vermessen werden. Ein Bereich mit starker Krümmung kann z.B. der Bereich um den maximalen Leistungspunkt MPP, MPP0 sein. Weitere Bereich sind z.B. die o.g. Knickstellen KN, die z.B. bei noch geringer Ausprägung messtechnisch beobachtet werden können. Zur Vermessung zumindest eines Teils der Generatorkennlinie KL1-KL3,KLF kann eine vorgebbare elektrische Netzeinspeiseleistung als aktive Last RL für die Photovoltaikgeneratoren PV eingestellt werden. Die variable Netzeinspeiseleistung wirkt dabei wie eine variable elektrische Belastung der Photovoltaikgeneratoren PV. Die betriebliche und vorzugsweise maximale Einspeiseleistung MPP wird dann nur für sehr kurze Zeiträume im Millisekundenbereich zur Vermessung abgesenkt.

Damit ist der Vorteil verbunden, dass zum einen die Bereiche der Generatorkennlinie vorzugsweise untersucht werden, in welchen signifikante Änderungen bei Störungen zu erwarten sind.

Ein weiterer Vorteil ist es, dass durch eine vorgebbare Netzeinspeiseleistung bei der Vermessung eines Teils der Generatorkennlinie die sonst in der Messeinrichtung MV abfallende Verlustwärme nicht entsteht und folglich nicht abgeführt werden muss. Vielmehr geht diese Verlustleistung wegen der elektrischen Einspeisung in das Netz U_{N} nicht verloren.

Schließlich können gemäß der Erfindung die Photovoltaikgeneratoren PV während des Einspeisebetriebs und außerhalb der Messzeiträume vorzugsweise im maximalen Leistungspunkt MPP, MPP0 auf der Generatorkennlinie KL1-KL3, KLF betrieben werden, so dass vorteilhaft ein maximaler wirtschaftlicher Betrieb der Photovoltaikanlage PA ermöglicht wird.

## Patentansprüche

1. Verfahren zur Diagnose von Photovoltaikgeneratoren (PV) einer Photovoltaikanlage (PA) während eines Einspeisebetriebs, wobei ein Photovoltaikgenerator (PV) ein oder mehrere Solarmodule (SM1-SM4) und eine zugehörige charakteristische Strom-Spannungs-Generatorkennlinie (KL1-KL3,KLF) aufweist, wobei ein Solarmodul (SM1-SM4) mehrere untereinander verschaltete Solarzellen aufweist, und wobei zumindest ein Teil der Generatorkennlinie (KL1-KL3,KLF) des Photovoltaikgenerators (PV) vermessen (A,V) wird,
**dadurch gekennzeichnet, dass**
ein automatisierter erster Wartungshinweis (WH1) ausgegeben wird, falls der zumindest eine Teil der vermessenen Strom-Spannungs-Generatorkennlinie (KLF) mindestens eine Knickstelle (KN) aufweiset.

2. Verfahren nach Anspruch 1,
wobei ein automatisierter zweiter Wartungshinweis (WH2) ausgegeben wird, falls der zumindest eine Teil der Generatorkennlinie eine vorgebbare betriebliche Grenzkennlinie (KLOV) zumindest in einem Punkt unterschreitet.

3. Verfahren nach Anspruch 1 oder 2, wobei der maximale Leistungspunkt (MPP) auf dem zumindest einen Teil der Generatorkennlinie ermittelt wird und dann ein dritter Wartungshinweis (WH3) ausgegeben wird, falls ein vorgebbarer maximaler Grenzleistungspunkt (MPP0V) unterschritten wird.

4. Verfahren nach einem der vorangegangenen Ansprüche, wobei eine aktuelle Temperatur (T) der Solarzellen und/oder eine aktuelle spektrale Einstrahlungsintensität (ε) zur Normierung (KL0) eines aktuell vermessenen Teils der Generatorkennlinie (KL1-KL3,KLF) gemessen wird.

5. Verfahren nach Anspruch 4, wobei die Normierung (KL0) auf eine Temperatur (T₀) von 298K bei einer spektralen Einstrahlungsintensität (ε₀) von 1000W/m² auf Basis eines AM 1,5-Spektrums nach der IEC-Norm 904-3, Teil III, erfolgt.

6. Verfahren nach einem der vorangegangenen Ansprüche, wobei als zumindest eine Teil der aktuell vermessenen und ggf. normierten Generatorkennlinie (KL1-KL3, KLF, KL0) des Photovoltaikgenerators (PV) Bereiche mit starker Krümmung auf der Generatorkennlinie (KL1-KL3, KLF, KL0) vermessen werden.

7. Verfahren nach Anspruch 6, wobei ein Bereich mit starker Krümmung um den maximalen Leistungspunkt (MPP, MPP0) liegt.

8. Verfahren nach einem der vorangegangenen Ansprüche, wobei die Photovoltaikgeneratoren (PV) während des Einspeisebetriebs und außerhalb der Messzeiträume vorzugsweise im maximalen Leistungspunkt (MPP,MPP0) auf der Generatorkennlinie (KL1-KL3, KLF, KL0) betrieben werden.

9. Verfahren nach einem der vorangegangenen Ansprüche, wobei zur Vermessung zumindest eines Teils der Generatorkennlinie (KL1-KL3,KLF) eine vorgebbare elektrische Netzeinspeiseleistung als aktive Last für die Photovoltaikgeneratoren (PV) eingestellt wird.

10. Solarwechselrichter (WR) zur Einspeisung in ein elektrisches Netz (U_{N}), insbesondere in ein 1-phasiges oder 3-phasiges 50Hz- bzw. 60Hz-Wechselspannungsnetz, mit
a) einer Eingangsseite (+,-) zum Anschluss zumindest eines ein oder mehrere Solarmodule (SM1-SM4) aufweisenden Photovoltaikgenerators (PV),
b) einer Ausgangsseite (L,N) zur Netzeinspeisung (U_{N}),
c) zumindest einem Energiespeicher (W,C), Dioden (D11, D12) und Halbleiterschaltern (S1-S5) zur Erzeugung der ausgangseitigen Wechselspannung bzw. Wechselspannungen (U_{N}),
d) einen Mikrocontroller (MC) zumindest zur Ansteuerung der Halbleiterschalter (S1-S5), und
e) Messmittel (A,V) zumindest zur Erfassung der elektrischen Ein- und Ausgangsgrößen (IS, US, U_{N}) für die Steuerung des Solarwechselrichters (WR),
**gekennzeichnet durch**
den Mikrocontroller (MC), welcher die Halbleiterschalter (S1-S5) so ansteuert, dass zumindest ein Teil einer charakteristischen Strom-Spannungs-Generatorkennlinie (KL1-KL3, KLF) eines angeschlossenen Photovoltaikgenerators (PV) vermessbar ist, und **durch** Ausgabemittel (BUS) für einen ersten Wartungshinweis (WH1), falls der zumindest eine Teil der vermessenen Generatorkennlinie (KL1-KL3,KLF) mindestens eine Knickstelle (KN) aufweist.

11. Solarwechselrichter (WR) nach Anspruch 10, wobei die Halbleiterschalter (S1-S5) so ansteuerbar sind, dass eine vorgebbare elektrische Netzeinspeiseleistung einstellbar ist.

12. Solarwechselrichter (WR) nach Anspruch 10 oder 11, wobei der Mikrocontroller (MC) die Halbleiterschalter (S1-S5) so ansteuert, dass eine variable elektrische Netzeinspeiseleistung ausgehend von einem maximalen Leistungspunkt (MPP) in beiden Richtungen auf der Generatorkennlinie (KL1-KL3,KLF) einstellbar ist.

13. Solarwechselrichter (WR) nach einem der vorangegangenen Ansprüche 10 bis 12, mit Vergleichsmitteln und Ausgabemitteln (BUS) für einen zweiten und dritten Wartungshinweis (WH2, WH3) zur Durchführung des Verfahrens nach einem der Ansprüche 2 oder 3.

14. Solarwechselrichter (WR) nach Anspruch 12 oder 13
a) mit einer Anschlussmöglichkeit für einen Temperatursensor (TS) und/oder einen Einstrahlungsintensitäts-Sensor (ES) für einen Photovoltaikgenerator (PV), und
b) den Vergleichsmitteln und Ausgabemitteln (BUS) für Wartungshinweise (WH1-WH3) zur Durchführung des Verfahrens nach einem der Ansprüche 1 bis 9.

15. Photovoltaikanlage (PA) zur Einspeisung in ein elektrisches Netz (U_{N}) mit zumindest einem Solarwechselrichter (WR) nach einem der vorangegangenen Ansprüche 10 bis 14 mit zumindest einem angeschlossenen Photovoltaikgenerator (PV) .

16. Photovoltaikanlage (PA) nach Anspruch 15, wobei die jeweiligen Solarwechselrichter (WR) datentechnisch (BUS) mit einer Anlagenleitebene zur zentralen Steuerung und Betriebsführung der Photovoltaikanlage (PA) verbunden sind, u.a. zur Übermittlung der Wartungshinweise (WH1-WH3) und/oder von gemessenen Generatorkennlinien (KL1-KL3,KLF) der jeweiligen Solarwechselrichter (WR) zur zentralen Ausgabe von Wartungshinweisen (WH1-WH3).

## Claims

1. Method for diagnosing photovoltaic generators (PV) of a photovoltaic installation (PA) during a feed-in operation, where a photovoltaic generator (PV) comprises one or more solar modules (SM1-SM4) and an associated characteristic current-voltage generator characteristic (KL1-KL3, KLF), where a solar module (SM1-SM4) has a plurality of interconnected solar cells, and where at least one section of the generator characteristic (KL1-KL3, KLF) of the photovoltaic generator (PV) is measured (A, V),
**characterized in that**
an automated first maintenance indicator (WH1) is output if the at least one section of the measured current-voltage generator characteristic (KLF) has at least one knee (KN).

2. Method according to Claim 1,
where an automated second maintenance indicator (WH2) is output if the at least one section of the generator characteristic, at least at one point, lies below a definable operational limiting characteristic (KL0V).

3. Method according to Claim 1 or 2, where the point of maximum power (MPP) is determined on the at least one section of the generator characteristic, and then a third maintenance indicator (WH3) is output if a definable point of maximum power threshold (MPP0V) is undershot.

4. Method according to one of the preceding claims, where a prevailing temperature (T) of the solar cells and/or a prevailing spectral irradiance (ε) is measured for normalizing (KL0) a currently measured section of the generator characteristic (KL1- KL3, KLF).

5. Method according to Claim 4, where the normalization (KL0) is performed as specified in IEC standard 904-3, part III to a temperature (T₀) of 298K for a spectral irradiance (ε₀) of 1000W/m² on the basis of an AM 1.5 spectrum.

6. Method according to one of the preceding claims, where regions having sharp curvature on the generator characteristic (KL1-KL3, KLF, KL0) are measured as the at least one section of the currently measured, and if applicable normalized, generator characteristic (KL1-KL3, KLF, KL0) of the photovoltaic generator (PV).

7. Method according to Claim 6, where a region having sharp curvature lies about the point of maximum power (MPP, MPP0).

8. Method according to one of the preceding claims, where the photovoltaic generators (PV) are operated during the feed-in operation and outside the measurement periods preferably at the point of maximum power (MPP, MPP0) on the generator characteristic (KL1-KL3, KLF, KL0).

9. Method according to one of the preceding claims, where for measuring at least one section of the generator characteristic (KL1-KL3, KLF), a definable electrical feed-power to the grid is set as the active load for the photovoltaic generators (PV).

10. Solar inverter (WR) for feeding into an electricity grid (U_{N}), in particular a 1-phase or 3-phase 50Hz or 60Hz AC grid, having
a) an input side (+,-) for connecting at least one photovoltaic generator (PV) comprising one or more solar modules (SM1-SM4),
b) an output side (L, N) for feeding into the grid (U_{N}),
c) at least one energy storage device (W, C), diodes (D11, D12) and semiconductor switches (S1-S5) for generating the output-side AC voltage or AC voltages (U_{N}),
d) a microcontroller (MC) at least for controlling the semiconductor switches (S1-S5), and
e) measurement means (A, V) at least for detecting the electrical input and output parameters (IS, US, U_{N}) for controlling the solar inverter (WR),
**characterized by**
the microcontroller (MC), which controls the semiconductor switches (S1-S5) so that at least one part of a characteristic current-voltage generator characteristic (KL1-KL3, KLF) of a connected photovoltaic generator (PV) can be measured, and by output means (BUS) for a first maintenance indicator (WH1), if the at least one section of the measured generator characteristic (KL1-KL3, KLF) has at least one knee (KN).

11. Solar inverter (WR) according to Claim 10, where the semiconductor switches (S1-S5) can be controlled so that a definable electrical feed-power to the grid can be set.

12. Solar inverter (WR) according to Claim 10 or 11, where the microcontroller (MC) controls the semiconductor switches (S1-S5) so that a variable electrical feed-power to the grid can be set in both directions on the generator characteristic (KL1-KL3, KLF) around a point of maximum power (MPP).

13. Solar inverter (WR) according to one of the preceding Claims 10 to 12, having comparison means and output means (BUS) for a second and third maintenance indicator (WH2, WH3) for implementing the method according to one of the Claims 2 or 3.

14. Solar inverter (WR) according to Claim 12 or 13, having
a) a connection facility for a temperature sensor (TS) and/or an irradiance sensor (ES) for a photovoltaic generator (PV), and
b) the comparison means and output means (BUS) for maintenance indicators (WH1-WH3) for implementing the method according to one of the Claims 1 to 9.

15. Photovoltaic installation (PA) for feeding into an electricity grid (U_{N}) having at least one solar inverter (WR) according to one of the preceding Claims 10 to 14, having at least one connected photovoltaic generator (PV).

16. Photovoltaic installation (PA) according to Claim 15, where the respective solar inverters (WR) have a data communications link (BUS) to an installation control level for central control and system management of the photovoltaic installation (PA), one of the functions being to communicate the maintenance indicators (WH1-WH3) and/or the measured generator characteristics (KL1-KL3, KLF) of the respective solar inverters (WR) for central output of the maintenance indicators (WH1-WH3).

## Revendications

1. Procédé pour le diagnostic de générateurs photovoltaïques (PV) d'une installation photovoltaïque (PA) pendant un mode de fonctionnement d'alimentation, un générateur photovoltaïque (PV) comportant un ou plusieurs modules solaires (SM1 à SM4) et une courbe caractéristique de générateur courant-tension (KL1 à KL3, KLF) associée, un module solaire (SM1 à SM4) comportant plusieurs cellules solaires branchées entre elles et au moins une partie de la courbe caractéristique de générateur (KL1 à KL3, KLF) du générateur photovoltaïque (PV) étant mesurée (A, V),
**caractérisé par le fait que**
l'on délivre un premier avis de maintenance automatisé (WH1) si la - au moins une - partie de la courbe caractéristique de générateur courant - tension (KLF) mesurée comporte au moins un point d'inflexion (KN).

2. Procédé selon la revendication 1, dans lequel on délivre un deuxième avis de maintenance automatisé (WH2) si la - au moins une - partie de la courbe caractéristique de générateur devient inférieure au moins en un point à une courbe caractéristique limite opérationnelle (KL0V) pouvant être prescrite.

3. Procédé selon la revendication 1 ou 2, dans lequel on détermine le point de puissance maximale (MPP) sur la - au moins une - partie de la courbe caractéristique de générateur et on délivre ensuite un troisième avis de maintenance (WH3) si on passe en dessous d'un point de puissance limite maximale (MPPOV) pouvant être prescrit.

4. Procédé selon l'une des revendications précédentes, dans lequel on mesure une température actuelle (T) des cellules solaires et/ou une intensité de rayonnement incident spectrale actuelle (ε) pour normer (KLO) une partie actuellement mesurée de la courbe caractéristique de générateur (KL1 à KL3, KLF).

5. Procédé selon la revendication 4, dans lequel on effectue la normalisation (KL0) sur une température (T₀) de 298 K pour une intensité de rayonnement incident spectrale (ε₀) de 1 000 W/m² sur la base d'un spectre AM 1,5 selon la norme IEC 904-3, partie III.

6. Procédé selon l'une des revendications précédentes, dans lequel on mesure comme au moins une partie de la courbe caractéristique de générateur actuellement mesurée et éventuellement normée (KL1 à KL3, KLF, KL0) du générateur photovoltaïque (PV) des zones à forte courbure sur la courbe caractéristique de générateur (KL1 à KL3, KLF, KL0).

7. Procédé selon la revendication 6, dans lequel une zone à forte courbure se trouve autour du point de puissance maximale (MPP, MPP0).

8. Procédé selon l'une des revendications précédentes, dans lequel on exploite les générateurs photovoltaïques (PV) pendant le mode de fonctionnement d'alimentation et en dehors des intervalles de temps de mesure de préférence au point de puissance maximale (MPP, MPP0) sur la courbe caractéristique de générateur (KL1 à KL3, KLF, KL0).

9. Procédé selon l'une des revendications précédentes, dans lequel, pour mesurer au moins une partie de la courbe caractéristique de générateur (KL1 à KL3, KLF), on règle une puissance d'alimentation de réseau électrique pouvant être prescrite comme charge active pour les générateurs photovoltaïques (PV).

10. Onduleur solaire (WR) pour l'alimentation dans un réseau électrique (U_{N}), notamment dans un réseau de tension alternative à 50 Hz ou 60 Hz, à 1 phase ou à 3 phases, avec :
a) un côté d'entrée (+, -) pour le raccordement d'au moins un générateur photovoltaïque (PV) comportant un ou plusieurs modules solaires (SM1 à SM4),
b) un côté de sortie (L, N) pour l'alimentation de réseau (U_{N}),
c) au moins un accumulateur d'énergie (W, C), des diodes (D11, D12) et des interrupteurs à semi-conducteurs (S1 à S5) pour la production de la ou des tensions alternatives côté sortie (U_{N}),
d) un microcontrôleur (MC) au moins pour la commande des interrupteurs à semi-conducteurs (S1 à S5), et
e) des moyens de mesure (A, V) au moins pour la détection des grandeurs d'entrée et de sortie électriques (IS, US, U_{N}) pour la commande de l'onduleur solaire (WR),
**caractérisé par** le microcontrôleur (MC) qui commande les interrupteurs à semi-conducteurs (S1 à S5) de telle sorte qu'au moins une partie d'une courbe caractéristique de générateur courant-tension (KL1 à KL3, KLF) d'un générateur photovoltaïque (PV) raccordé peut être mesurée et par des moyens de sortie (BUS) pour un premier avis de maintenance (WH1) si la - au moins une - partie de la courbe caractéristique de générateur (KL1 à KL3, KLF) mesurée comporte au moins un point d'inflexion (KN).

11. Onduleur solaire (WR) selon la revendication 10, dans lequel les interrupteurs à semi-conducteurs (S1 à S5) peuvent être commandés de telle sorte qu'une puissance d'alimentation de réseau électrique pouvant être prescrite est réglable.

12. Onduleur solaire (WR) selon la revendication 10 ou 11, dans lequel le microcontrôleur (MC) commande les interrupteurs à semi-conducteurs (S1 à S5) de telle sorte qu'une puissance d'alimentation de réseau électrique variable est réglable à partir d'un point de puissance maximale (MPP) dans les deux sens sur la courbe caractéristique de générateur (KL1 à KL3, KLF).

13. Onduleur solaire (WR) selon l'une des revendications 10 à 12, avec des moyens de comparaison et des moyens de sortie (BUS) pour un deuxième et troisième avis de maintenance (WH2, WH3) pour la mise en oeuvre du procédé selon l'une des revendications 2 ou 3.

14. Onduleur solaire (WR) selon la revendication 12 ou 13,
a) avec une possibilité de raccordement pour un capteur de température (TS) et/ou pour un capteur d'intensité de rayonnement incident (ES) pour un générateur photovoltaïque (PV), et
b) avec les moyens de comparaison et moyens de sortie (BUS) pour des avis de maintenance (WH1 à WH3) pour la mise en oeuvre du procédé selon l'une des revendications 1 à 9.

15. Installation photovoltaïque (PA) pour l'alimentation dans un réseau électrique (U_{N}) avec au moins un onduleur solaire (WR) selon l'une des revendications précédentes 10 à 14 avec au moins un générateur photovoltaïque (PV) raccordé.

16. Installation photovoltaïque (PA) selon la revendication 15, dans laquelle les onduleurs solaires respectifs (WR) sont reliés informatiquement (BUS) à un niveau de contrôle de gestion pour la commande centrale et la conduite d'exploitation de l'installation photovoltaïque (PA), entre autres pour la transmission des avis de maintenance (WH1 à WH3) et/ou des courbes caractéristiques de générateur mesurées (KL1 à KL3, KLF) des onduleurs solaires respectifs (WR) en vue de la sortie centralisée d'avis de maintenance (WH1 à WH3).
